# EUROPÄISCHE PATENTSCHRIFT

(11) **EP 2 070 668 B1**
(45) Veröffentlichungstag und Bekanntmachung des Hinweises auf die Patenterteilung: **23.02.2011**
(21) Anmeldenummer: 08105970.1
(22) Anmeldetag: 11.12.2008
(51) Int. Cl.: B26D 7/01, B26D 7/27

(54) **Stanz-Prägemaschine mit flexibler Bearbeitungseinheit**
Stamping machine with flexible machining unit
Machine de découpage-poinçonnage dotée d'une unité de traitement flexible

(30) Priorität: 13.12.2007 DE 102007060594
(43) Veröffentlichungstag der Anmeldung: 17.06.2009
(73) Patentinhaber: Plastal GmbH, 91781 Weissenburg (DE)
(72) Erfinder: Albert, Bruno, 90763 Fürth (DE)
(74) Vertreter: Uppena, Franz

(56) Entgegenhaltungen:
- WO-A-2004/058447
- DE-A1- 19 952 318
- US-A- 4 273 738

## Beschreibung

Die Erfindung betrifft eine Stanz-Prägemaschine zum Einbringen von gestanzten und geprägten Durchbrüchen in Kunststoffteile nach dem Oberbegriff des Anspruchs 1, ein Verfahren zur Bearbeitung eines Kunststoffteils auf der Stanz-Prägemaschine und eine bevorzugte Verwendung der Stanz-Prägemaschine und des Verfahrens.

Bei Stoßfängern für Kraftfahrzeuge müssen Durchbrüche z. B. für Ultraschall-Parksensoren eingebracht werden. Hierzu ist es bekannt, die Befestigungen der Sensoren an den Stoßfängern im Herstellungsverfahren anzuformen. Auf Grund unterschiedlicher Varianten der Stoßfänger werden auch mehrere Spritzwerkzeuge benötigt, wobei Lagerung, Handling, Montage einen großen Kostenfaktor darstellen.

Ein weiteres Problem stellen die Durchbrüche für die Parksensoren dar, da die Parksensoren keinen Kontakt zum Stoßfänger haben sollten, jedoch auch kleinste unterschiedliche Beabstandungen des Außenumfangs der Parksensoren zum Stoßfänger sichtbar sind.

Beim Spritzgießen stellen die Kerne, die die Durchbruchskontur im Kunststoffteil erzeugen, ein Fließhindernis für die Kunststoffschmelze dar. Das Zusammenfließen der laminar fließenden Schmelzströme führt unweigerlich zu Bindenähten im Spritzteil bzw. den damit verbundenen Problemen wie Fehlstellen, geringe Festigkeiten, optische Beeinträchtigungen. Zum anderen sind die oben genannten Durchbrüche nur in bestimmten Ausstattungsvarianten der Fahrzeuge vorgesehen. Aus Wirtschaftlichkeitsgründen sollte die Variantenbildung jedoch relativ spät im Gesamtprozess erfolgen, also ein späteres Erzeugen der Durchbrüche ist kostengünstiger als das Spritzgießen von unterschiedlichen Bauteilvarianten mittels verschiedener Spritzgießwerkzeuge oder Wechseleinsätze (Rüstzeiten, Werkzeugverschleiß) in einem Betriebsteil.

Für das Einbringen der Durchbrüche eignen sich prinzipiell sämtliche Bearbeitungsverfahren wie Bohren, Fräsen, Schleifen oder Stanzen. Jedoch engen Wirtschaftlichkeitsüberlegungen und andere Randbedingungen diese Auswahl in der Praxis stark ein. Hinzu kommt, dass der Übergang der Durchbruchsinnenfläche zur -außenfläche (Sichtbereich) nicht scharfkantig sein darf, um Verletzungen zu vermeiden. Ein scharfkantiger Übergang führt unweigerlich zu einem Lackwulst um den Durchbruch herum, der durch den Lackiervorgang optisch noch verstärkt werden würde.

Eine weitere Problematik entsteht bei der Anformung eines Konus von der Innenseite des Stoßfängers. Beim Anformen des Konus von unten darf sich der verdrängte Kunststoff nicht nach oben in der Sichtfläche aufbauen, damit beim Lackieren keine Abzeichnungen im Sichtbereich erkennbar werden.

Der angebrachte Konus soll zentrisch zur Bohrung liegen, damit beim Einbau des Sensors kein Lageversatz mit dem Sensor entsteht.

Die Position der eingebauten Sensorachse zur Stanzachse sollte mit einer Toleranz von +/- 0,01 mm realisiert werden.

Oben genannte Anforderung und steigende optische Qualitätsanforderungen, sowie die Lage-Position der Sensoren in Verbindung mit den Designanforderungen nach möglichst großen, ungestörten Sichtflächen, erfordern die Suche nach einer kostengünstigen und qualitativen Lösung der dargstellten Probleme, um beliebige Durchbrüche wulstfrei mit ausreichend großem Übergangsradius und angeformtem Konus zu ermöglichen.

Zur Lösung dieses Problems wurden bisher Tunnel-Stanz-Prägemaschinen verwendet (siehe Figur 1). Diese Maschine besteht aus einem Maschinengestell 1 (welches im Einzelnen in der DE 102 61 012 A1 beschrieben ist), einer Aufnahmeeinheit 2 für das zu bearbeitende Kunststoffteil und einer Stanz- Prägeeinheit 3 (welche im Einzelnen in der DE 102 39 453 A1 und der DE 102006012245 A1 1 beschrieben ist). Die Aufnahmeeinheit 2 besteht aus einer Einlegestation und einer (SMR) Schweißstation (EP 1 250 996 B1 beschreibt eine Fakirsonotrode für den Schweißvorgang).

Alle oben genannten Maschinenkomponenten sind aufeinander abgestimmt und fest miteinander verbunden. Es ist kein Austausch der Aufnahmeeinheit möglich, so dass die gesamte Maschine nur für eine einzige Kontur (ein bestimmter Stoßfänger) verwendet werden kann. Die Bearbeitung von mehreren Stoßfängern mit unterschiedlicher 3D Strackkontur ist hiermit nicht möglich. Eine Maschine kann nur für eine Stoßfängervariante verwendet werden.

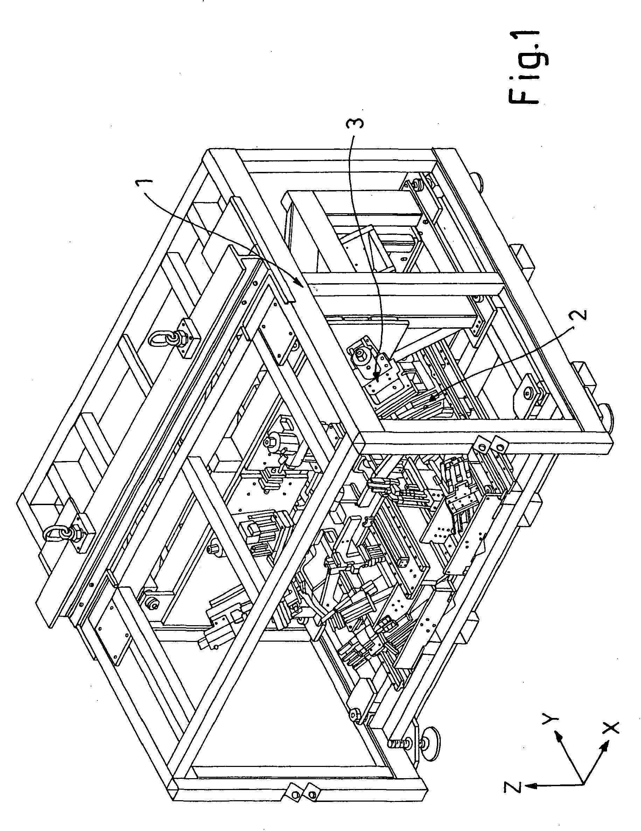

### Bisheriger Ablauf nach dem Stand der Technik (siehe Figur 1):

Das zu bearbeitende Bauteil (Stoßfänger) wird in die Maschine eingelegt und mittels Niederhaltern fixiert. Anschließend werden Durchbrüche von oben gestanzt und ein Konus wird von unten am Durchbruch angeprägt. Anschließend wird ein PDC-Halter von unten angeschweißt. Zur Entnahme werden die Niederhalter geöffnet und geben das Bauteil frei. Die Entnahme des Bauteils ist nun möglich.

### Kritik am Stand der Technik:

Ein Austauschen der Aufnahmeeinheit ist nicht möglich, so dass die gesamte Maschine nur für eine einzige Kontur, d.h. für eine einzige Form eines Stoßfängers verwendet werden kann. Eine Bearbeitung von mehreren Stoßfängern mit unterschiedlichen 3D Strackkonturen ist nicht möglich. Es wird für jede Stoßfängervariante eine bestimmte Maschine benötigt, die speziell an die Stoßfängervariante angepasst sein muss.

Für jeden Stoßfänger muss eine neue Maschine bzw. Anlage gebaut werden, was hohe Kosten mit sich bringt. Zudem ist für das Ersatzteilgeschäft nach Serienauslauf eine hohe Lagerkapazität für die Vielzahl an Anlagen notwendig.

Der Erfindung liegt die Aufgabe zugrunde, eine Stanz-Prägemaschine nach dem Oberbegriff des Anspruchs 1 so zu verbessern, dass einfach und kostengünstig in beliebig geformte Kunststoffteile gestanzte und geprägte Durchbrüche mit extremer Genauigkeit einzubringen sind und zugleich Zusatzteile an diesen Durchbrüchen zu befestigen sind.

Erfindungsgemäß wird diese Aufgabe dadurch gelöst, dass die Stanzeinheiten/Stanz-Prägeeinheiten drehbar an einem in drei Dimensionen beweglichen Arm einer Roboteranlage befestigt sind und die Aufnahmeeinheit ein Kassettensystem mit auswechselbaren beweglichen Aufnahmetischen zur Aufnahme und Positionierung des Kunststoffteils ist und zumindest eine Bohrstation, zur Einbringung von Radien an den erzeugten Durchbrüchen und zumindest eine Schweißstation zum Anschweißen der Zusatzteile am Durchbruch umfasst. Hierdurch können einfach und kostengünstig in beliebig geformte Kunststoffteile gestanzte und geprägte Durchbrüche mit extremer Genauigkeit eingebracht werden und zugleich Zusatzteile an diesen Durchbrüchen befestigt werden. Durch die auswechselbaren beweglichen Aufnahmetische ist die Anpassung an die Geometrie der Kunststoffteile einfach und kostengünstig vorzunehmen. Die Stanzeinheiten/Stanz-Prägeeinheiten am Arm der Roboteranlage, die Bohrstationen und die Schweißstationen müssen nur noch an den Durchmesser des gewünschten Durchbruches angepasst werden, ein vollständiger Austausch ist jedoch in der Regel nicht erforderlich.

In einer erfindungsgemäßen Ausgestaltung besteht das Maschinengestell aus einem unabhängigen separaten Robotersegment mit der Roboteranlage und aus einem unabhängigen separaten Bauteilaufnahmesegment mit der Aufnahmeeinheit, der Bohrstation und der Schweißstation, wobei beide Segmente miteinander verbindbar sind. Dadurch ist die Stanz-Prägemaschine modulartig aufgebaut und kann leicht verlagert oder transportiert werden. Verschiedene Bauteilaufnahmesegmente können mit demselben Robotersegment verbunden werden. Die Verbindung geschieht bevorzugt durch Anflanschen.

In einer erfinderischen Ausgestaltung sind die Aufnahmeeinheit und/oder die Bohrstation und/oder die Schweißstation auf dem Bauteilaufnahmesegment schwimmend gelagert. Durch die schwimmende Lagerung des Bauteilaufnahmesegments werden Bodenunebenheiten einfach ausgeglichen und lange Einstell- und Abstimmzeiten entfallen. Dies wiederum bringt kürzere Produktionsstilizeiten mit sich. Die schwimmende Lagerung ist im Einzelnen in der DE 102 61 012 A1 beschrieben, auf die hier Bezug genommen wird.

Das Robotersegment ist bevorzugt fest auf dem Boden verankert. Hierdurch ist es ortsfest und damit stabil gelagert und muss nicht bei jedem Wechsel der Geometrie des Kunststoffteils neu justiert werden.

Die am beweglichen Arm der Roboteranlage befestigten Stanzeinheiten/Stanz-Prägeeinheiten sind bevorzugt auf einem E+C-Bügel angeordnet, wobei der E+C-Bügel aus einem C-förmigen C-Bügel und einem E-förmigen E-Bügel besteht und der C-Bügel rechtwinklig zum E-Bügel angeordnet ist und die Werkzeuge der Stanzeinheiten/Stanz-Prägeeinheiten an den jeweiligen Enden des C-Bügels und des E-Bügels angeordnet sind. Müssen die Stanzeinheiten/Stanz-Prägeeinheiten bei einem Bauteilwechsel ausgetauscht werden, muss nur der E+C-Bügel ausgetauscht werden. Bevorzugt ist er daher über ein Schnellwechselsystem am Arm des Roboters befestigt.

In spezieller Ausgestaltung ist ein Arm des C-Bügels zugleich ein Arm des E-Bügels. Die Roboteranlage kann durch entsprechendes Drehen und Verfahren des E+C-Bügels die gerade benötigten Stanz- und Prägewerkzeuge an die erforderliche Stelle positionieren.

In erfindungsgemäßer Ausgestaltung sind am C-Bügel das Stanz-Prägewerkzeug und an den zwei Enden des E-Bügels Werkzeuge für die Einbringung der Stanzungen angeordnet.

Eine bevorzugte Ausführungsform ist dadurch gekennzeichnet, dass der E+C-Bügel auf seinem C-Bügel einen ersten Prägestempel zum Prägen eines Radius mit einem auf seiner Längsachse in Richtung zum Kunststoffteil hervorstehenden Vorlocher zum Einbringen einer Zentrierbohrung aufweist und bevor der erste Prägestempel in das Kunststoffteil eingreift, der Vorlocher auf der zum Kunststoffteil gegenüberliegenden Seite in eine Lochführung einfährt und dadurch der erste Prägestempel beim Prägen zentriert ist und der erste Prägestempel und damit der Vorlocher in seiner Endprägestellung für den Rest des Stanzprägens verankert bleibt und der C-Bügel auf der Innenfläche des Kunststoffteils einen zweiten Prägestempel zum Prägen eines Konus aufweist, wobei der zweite Prägestempel mit seiner Führungsbohrung auf den Vorlocher auffährt und danach erst prägend das Kunststoffteil formt.

Ein Verfahren zur Bearbeitung eines Kunststoffteils auf der beschriebenen Stanz-Prägemaschine ist gekennzeichnet durch folgende Verfahrensschritte:
a) Einlegen des Kunststoffteils auf die Aufnahmeeinheit und Spannen mittels Niederhaltern
b) Verfahren der Aufnahmeeinheit in die Bohrstation hinein
c) Heranfahren und Positionieren des E+C-Bügels, vom Roboter gesteuert, und Stanzung der Durchbrüche
d) Verfahren des E+C-Bügels in seine Ausgangsposition
e) Verfahren der Aufnahmeeinheit in die Bohrstation und Bohren oder Frä-sen des Konus an den gestanzten Durchbrüchen
f) Verfahren der Aufnahmeeinheit in die Schweißstation, wo Zusatzteile an dem Durchbruch befestigt werden
g) Verfahren der Aufnahmeeinheit in die Ausgangsposition, öffnen der Niederhalter und Entnahme des Kunststoffteils.

Bevorzugt ist die Verwendung der Stanz-Prägemaschine und des Verfahrens zur Bearbeitung von Stoßfängern an Kraftfahrzeugen und zum Befestigen von insbesondere Park-Distance-Control-Haltern auch PDC-Halter genannt an den Stoßfängern.

Nachfolgend wird das Prägestanzen genauer erläutert, wie es in der DE 102 39 453 B4 beschrieben ist. Hierbei umgreift der Prägestempel konzentrisch den Stanzstempel und beide Stempel sind unabhängig voneinander in Axialrichtung verschiebbar.

Dieses Verfahren zum Prägestanzen von Durchbrüchen in Kunststoffteilen mit einem erfindungsgemäßen Werkzeug ist dadurch gekennzeichnet, dass in einem ersten Arbeitsschritt beide Stempel bündig auf selber Höhe liegend in das Kunststoffteil eingefahren werden, den Durchbruch anstanzen und die Stanzkante zu einem Radius prägend kaltverformen und in einem zweiten Arbeitsschritt der Stanzstempel die verbleibende Restwandstärke des Durchbruchs ausstanzt, während der Prägestempel unter Druck in seiner Position gehalten wird.

Bevorzugt eignet sich das erfindungsgemäße Prägestanzen für weiche Kunststoffe, wie z. B. PP (Polypropylen) oder PP/EPDM (Polypropylen gemischt mit einem Kautschuk wie Ethylen-Propylen-Dien-Kautschuk).

Das Verfahren läuft wie folgt ab: In der ersten Abwärtsbewegung (Hub) des Stempels fahren die bündig auf selber Höhe liegenden Präge- und Stanzstempel zusammen in das Kunststoffmaterial hinein und formen den Radius.

Im zweiten Schritt bewegt sich der Stanzstempel alleine nach unten und stanzt dabei den Durchbruch in das Kunststoffteil. Der Prägestempel verbleibt dabei unter Druck an seiner Position. Dadurch wird verhindert, dass der Prägestempel sich durch verdrängten Kunststoff anhebt und sich ein Prägewulst bildet. Charakteristisch für dieses Verfahren ist ein umlaufender Absatz in der Innenfläche des Durchbruchs. Dieser entsteht durch die Restwandstärke des Prägestempels am Radiusauslauf ("Messerkante") und liegt je nach Ausführung im Bereich von 0,1 bis 0,2 mm. Diese "Messerkante" bedingt auch die Grenzen dieses Verfahrens, da bei härteren oder verstärkten Kunststoffen diese Kante stark verschleißanfällig ist.

Nachfolgend wird die Erfindung an Hand von Figuren näher erläutert.
Figur 1 zeigt den Stand der Technik. Zur Erläuterung siehe Beschreibungseinleitung.

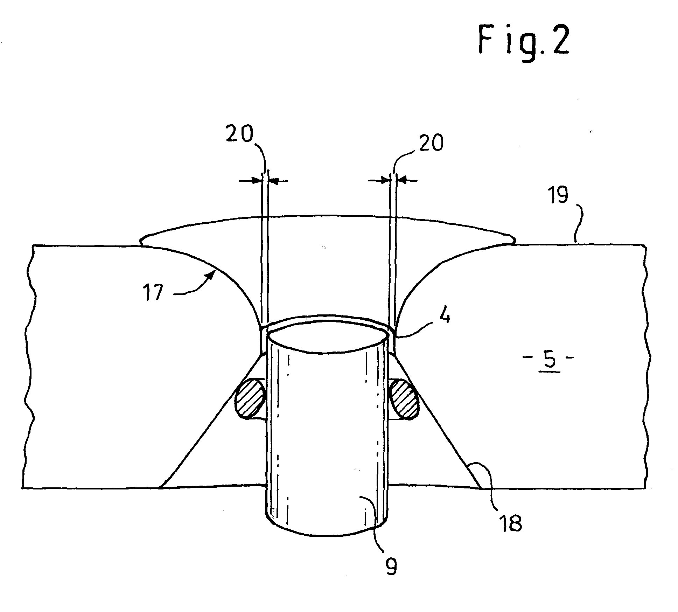

Figur 2 zeigt einen gestanzten und geprägten Durchbruch 4 in einem Kunststoffteil 5, wie er mit der erfindungsgemäßen Stanz-Prägemaschine herzustellen ist. Das Kunststoffteil 5 ist in diesem Fall ein Stoßfänger, an dem ein Ultraschall-Parksensor als Zusatzteil 9 angebaut ist. Der Durchbruch 4 ist von oben gestanzt und geht mit einem Radius 17 in die Oberfläche 19 des Kunststoffteils 5 über. Außerdem ist ein Konus 18 von unten am Durchbruch 4 angeprägt. Der Ultraschall-Parksensor ist mit einem Halter von unten angeschweißt. Dies zeigt Figur 2 nicht. Der Ultraschall-Parksensor ist auf seiner gesamten Oberfläche mit demselben Spaltmaß 20 vom Durchbruch 4 beabstandet.

Die Figuren 3 und 4 zeigen jeweils eine Ansicht der erfindungsgemäßen Stanz-Prägemaschine. Das Maschinengestell 1 besteht aus einem unabhängigen separaten Robotersegment 12 mit einer Roboteranlage 6 und aus einem unabhängigen separaten Bauteilaufnahmesegment 13 mit einer Aufnahmeeinheit 2, einer Bohrstation 8b und einer Schweißstation 8a, wobei beide Segmente 12, 13 aneinander geflanscht sind.

An der Roboteranlage 6 ist ein in drei Dimensionen beweglicher Arm 11 angebracht. An diesem Arm 11 ist drehbar ein E+C-Bügel 7 über ein Schnellspannsystem angeflanscht, an dem Stanzeinheiten/Stanz-Prägeeinheiten befestigt sind.

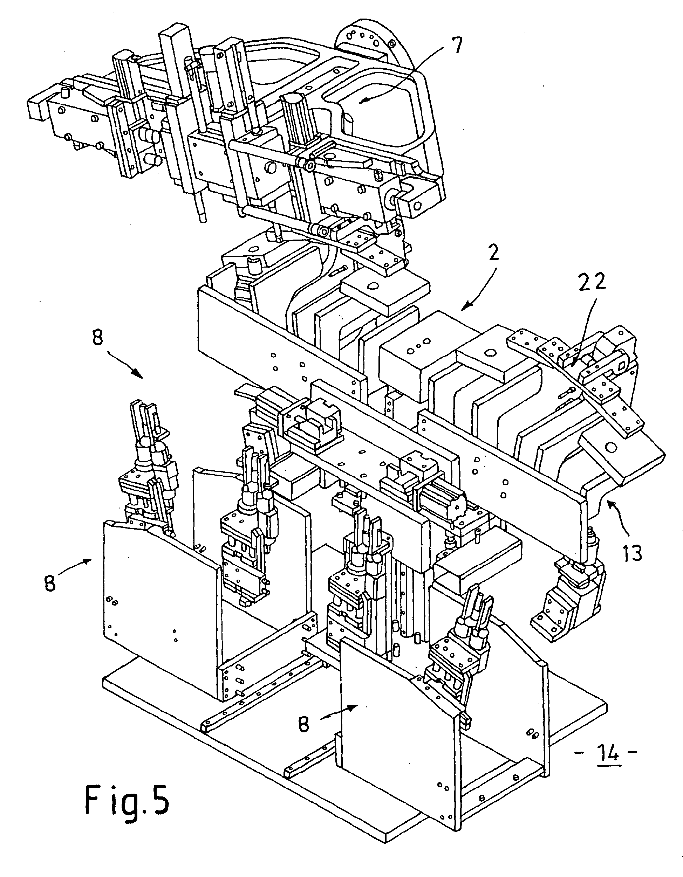

Figur 5 zeigt die Stanz-Prägemaschine im Einzelnen, wobei zur besseren Übersicht das Maschinengestell und die Roboteranlage nicht gezeigt sind. Figur 6 zeigt den E+C-Bügel 7 alleine.

Das neue Stanz-Prägemaschinenkonzept anhand der neuen Stanz-Prägemaschine ist gekennzeichnet durch:
1. eine 2-teilig aufgebaute Roboteranlage mit beweglichem Arm
2. ein neues Stanzwerkzeug, nämlich der E+C- Bügel 7, der am Roboterarm 11 befestigt ist.
3. ein Kassettensystem mit mehreren auswechselbaren Aufnahmetischen (2 oder mehr), Schweißstation und Bohrstation 8

### Zu 1: 2-teilig aufgebaute Roboteranlage/ Maschinengestell

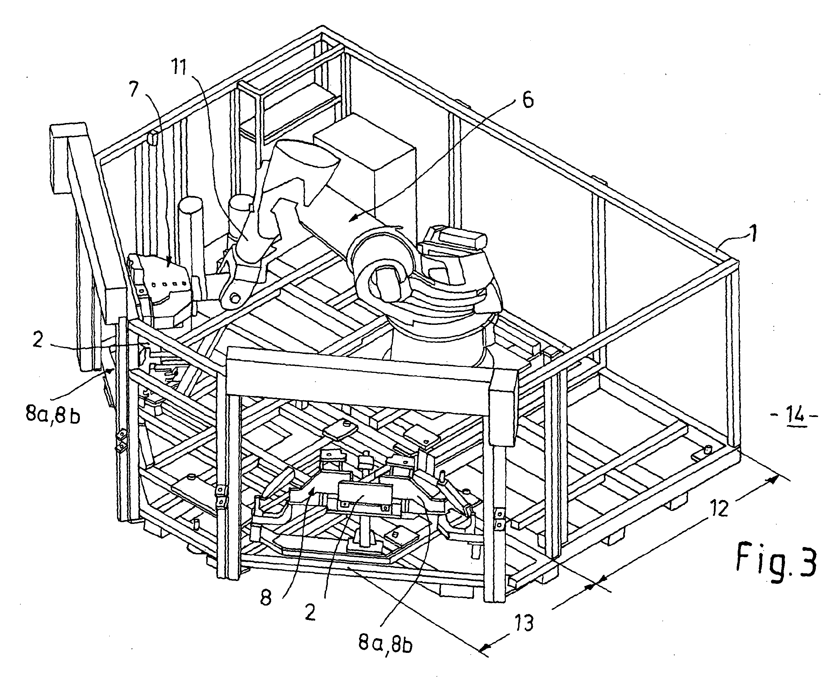

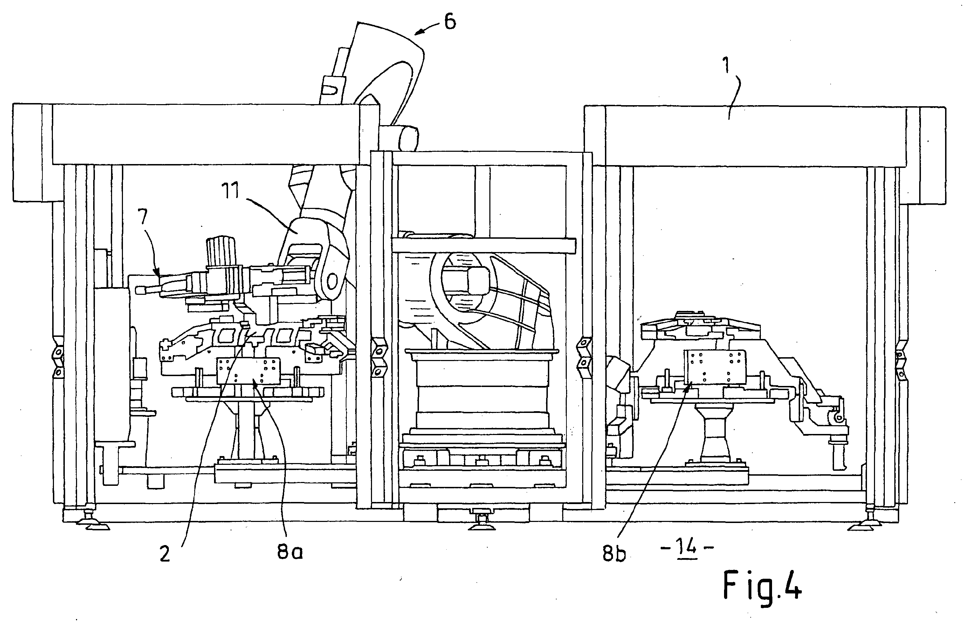

Die neue Maschine oder Anlage besteht aus zwei Segmenten. Segment 1 ist ein fest gelagertes Robotersegment 12. Dieses Robotersegment 12 ist vorteilhaft fest auf dem Boden 14 verankert und besteht aus einem Roboter, an dessen Arm 11 ein E+C-Bügel 7 drehbar befestigt ist. Der E+C-Bügel 7 trägt die Stanzeinheiten/ Stanz-Prägeeinheiten (siehe hierzu auch Figuren 3 und 4).

Das Segment 2 ist ein schwimmend gelagertes Bauteilaufnahmesegment 13 mit der Aufnahmeeinheit 2, der Bohrstation 8b und der Schweißstation 8a. Das Bauteilaufnahmesegment 13 ist an das Robotersegment 12 angeflanscht.

Dieser Aufbau ermöglicht eine einfache Verlagerung der Anlage und ebenso einen einfachen Transport. Die Stanz-Prägemaschine wird auch als Maschine oder Anlage bezeichnet.

Durch die schwimmende Lagerung des Segments 2, des Bauteilaufnahmesegment 13 werden Bodenunebenheiten einfach ausgeglichen und lange Einstell- und Abstimmzeiten entfallen. Dies wiederum bringt kürzere Produktionsstillzeiten mit sich. Die schwimmende Lagerung ist im Einzelnen in der DE 102 61 012 A1 beschrieben, auf die hier Bezug genommen wird.

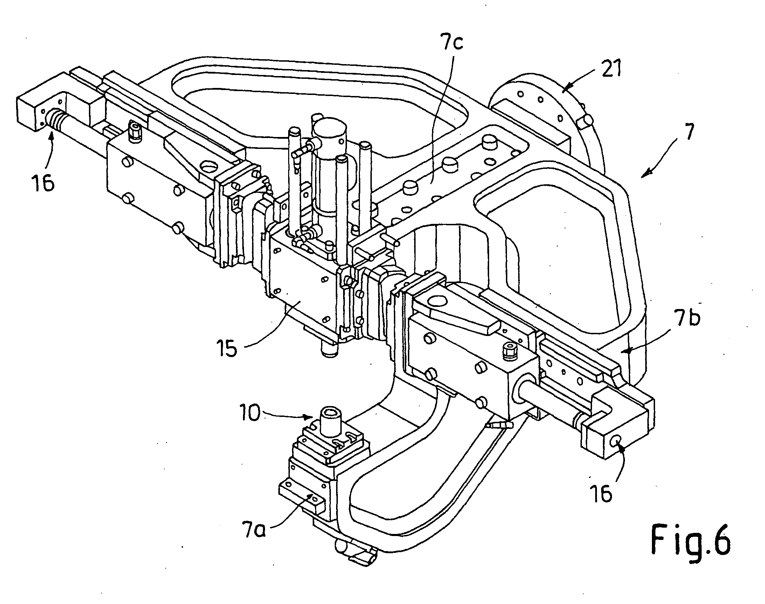

### Zu 2: Neuartiges Stanzwerkzeug: E+C- Bügel 7 (siehe insbesondere Fig. 6)

Der E+C-Bügel 7 ist ein Werkzeug, auf dem mehrere Stanzeinheiten/ Stanz-Prägeeinheiten 10 angeordnet sind. Der E+C-Bügel 7 besteht aus einem C-Bügel 7a, der sich in Z-Richtung erstreckt und E-Bügel 7b, der sich in Y-Richtung erstreckt. Die Richtungen sind in der Figur 3 bildlich dargestellt.

Zur Bearbeitung eines Kunststoffstoßfängers ist idealerweise das Stanz-Prägewerkzeug 15 für die Durchbrüche 4 am C-Bügel 7a angebracht, der E-Bügel 7b hält die Werkzeuge für die Einbringung der SML-Stanzungen (beidseitig, links + rechts). Mit SML-Stanzungen sind Side-Marker-Stanzungen gemeint, d.h. einfache Stanzungen zur Erzeugung eines Durchbruches 4. An den zwei Enden des E-Bügels 7b ist jeweils ein Werkzeug angebracht.

Der E+C-Bügel 7 ist an einem beweglichen Roboterarm 11 angebracht und durch ein Schnellwechselsystem 21 schnell austauschbar. Der E+C-Bügel 7 wird während des Stanzvorgangs durch den Roboter auf Position gehalten.

Der E+C-Bügel 7 ermöglicht die Bearbeitung mehrerer 3D Strakkonturen auf einer Anlage.

Der E+C-Bügel 7 kann, je nach Auslegung für verschiedene Strack-Konturen eingesetzt werden. Die Betätigung der Werkzeuge 16 zur Stanzung kann z.B. elektrisch, hydraulisch oder pneumatisch oder mittels Ultraschall erfolgen.

Die Positionierung der Stanzwerkzeuge 16 erfolgt mittels Suchstifte, die am E+C-Bügel 7 angeordnet sind und die in Führungsbuchsen im Aufnahmetisch bzw. in der Aufnahmeeinheit 2 eingreifen und dadurch die Stanzposition sowie den Stanzwinkel vorgeben.

Zu 3: Kassettensystem mit mehreren auswechselbaren Aufnahmeeinheiten 2 (2 oder mehr), Schweißstationen 8a und Bohrstationen 8b.

In der Regel besteht eine so genannte Kassette aus einer beweglichen Aufnahmeeinheit 2, zur Aufnahme und Positionierung des Kunststoffteils 5, einer Bohrstation 8b, zur Einbringung von Radien 17 (siehe Figur 2) an den erzeugten Durchbrüchen 4 und einer Schweißstation 8a.

Mit einem Schnellwechselsystem wird ein Austauschen der Aufnahmeeinheit 2 und der Schweiß- und Bohrstation 8a, 8b ermöglicht.

Dadurch können verschiedenste Konturen eines Kunststoffteils 5 in einer Anlage bearbeitet werden.

Nachfolgend wird der Ablauf einer Bearbeitung eines Stoßfängers auf der erfindungsgemäßen Stanz-Prägemaschine mit flexibler Bearbeitungseinheit beschrieben.
- 1.Schritt:: Einlegen des Bauteils bzw. Kunststoffteils 5 auf die Aufnahmeeinheit 2, die sich dabei in ihrer Ausgangsposition befindet, und Spannen mit- tels Niederhaltern 15.
- 2. Schritt:: Die Aufnahmeeinheit 2 fährt nach oben (Z-Richtung) und anschlie- ßend nach hinten (X-Richtung) in die Bohrstation hinein.

In dieser Position erfolgt die Stanzung der Durchbrüche 4 dadurch, dass der E+C-Bügel 7, vom Roboter gesteuert, heranfährt, sich entsprechend positioniert und stanzt. Anschließend fährt der E+C-Bügel 7 wieder zurück in seine Ausgangsposition. Die Aufnahmeeinheit 2 senkt sich nun (in die Z-Richtung) in die Bohrstation und der Konus 18 an den gestanzten Durchbrüchen 4 wird gebohrt oder gefräst. Die Aufnahmeeinheit 2 verfährt dann zurück in die ursprüngliche Ausgangsposition. Hier senkt sie sich nun (in Z-Richtung) in die Schweißstation, wo Anbauteile, wie z. B. der Sensorhalter befestigt werden. Anschließend kehrt die Aufnahmeeinheit 2 in ihre Ausgangsposition zurück. Die Niederhalter 22 werden geöffnet und das Kunststoffteil 5 ist bereit zur Entnahme.

Bevorzugt wird die erfindungsgemäße Maschine für Kunststoffteile, insbesondere Stoßfänger, verwendet, die eine Außenfläche und eine Innenfläche aufweisen und mit Durchbrüchen höchster Genauigkeit zur Aufnahme von Anbauteilen versehen sein müssen, wobei die Anbauteile über ein exaktes Spaltmaß 20 in die Durchbrüche 4 einsetzbar sein müssen. Dies wird dadurch erreicht, dass der Übergang von der Durchbruchsinnenfläche zur Außenfläche des Kunststoffteils 5 als Radius 17 eingeprägt ist. In spezieller Ausbildung ist der Übergang von der Durchbruchsinnenfläche zur Innenfläche des Kunststoffteils als Konus 18 ausgebildet.

In bevorzugter Weise ist das Kunststoffteil ein Stoßfänger für Kraftfahrzeuge und das Anbauteil ein Parksensor (PDC).

Zur Bearbeitung auf der Maschine wird das Kunststoffteil 5 auf dem Aufnahmetisch über die Niederhalter 22 verankert. Der E+C-Bügel 7 weist auf seinem C-Bügel 16 einen ersten Prägestempel zum Prägen eines Radius 17 mit einem auf seiner Längsachse in Richtung zum Kunststoffteil 5 hervorstehenden Vorlocher zum Einbringen einer Zentrierbohrung auf. Bevor der erste Prägestempel in das Kunststoffteil 5 eingreift, fährt der Vorlocher auf der zum Kunststoffteil gegenüberliegenden Seite in eine Lochführung ein und dadurch ist der erste Prägestempel beim Prägen zentriert. Der erste Prägestempel und damit der Vorlocher bleibt in seiner Endprägestellung für den Rest des Stanzprägens verankert. Der E+C-Bügel 7 weist auf der Innenfläche des Kunststoffteils einen zweiten Prägestempel zum Prägen des Konus 18 auf. Der zweite Prägestempel fährt mit seiner Führungsbohrung auf den Vorlocher auf und formt danach erst prägend das Kunststoffteil.

Weiterhin ist ein Stanzstempel zum Ausstanzen des nach dem Prägen mit den beiden Prägestempeln verbleibenden Mittelteils vorhanden.

## Patentansprüche

1. Stanz-Prägemaschine zum Einbringen von gestanzten und geprägten Durchbrüchen (4) in Kunststoffteile (5) als automobile Außenanbauteile und zur Befestigung von Zusatzteilen (9) an diesen Durchbrüchen (4), mit einem Maschinengestell (1) in dem eine Aufnahmeeinheit (2) zur Aufnahme der zu bearbeitende Kunststoffteile (5), Stanzeinheiten/Stanz-Prägeeinheiten (10) zum Stanzen und Prägen der Durchbrüche (4), und eine Schweißstation (8a) zum Befestigen der Zusatzteile am Durchbruch (4), angeordnet sind, **dadurch gekennzeichnet, dass** die Stanzeinheiten/Stanz-Prägeeinheiten (10) drehbar an einem in drei Dimensionen beweglichen Arm (11) einer Roboteranlage (6) befestigt sind und die Aufnahmeeinheit (2) ein Kassettensystem mit auswechselbaren beweglichen Aufnahmetischen zur Aufnahme und Positionierung des Kunststoffteils (5) ist und zumindest eine Bohrstation (8b), zur Einbringung von Radien an den erzeugten Durchbrüchen (4), und zumindest eine Schweißstation (8a) zum Anschweißen der Zusatzteile (9) am Durchbruch (4) umfasst.

2. Stanz-Prägemaschine nach Anspruch 1, **dadurch gekennzeichnet, dass** das Maschinengestell (1) aus einem unabhängigen separaten Robotersegment (12) mit der Roboteranlage (6) und aus einem unabhängigen separaten Bauteilaufnahmesegment (13) mit der Aufnahmeeinheit (2), der Bohrstation (8b) und der Schweißstation (8a) besteht, wobei beide Segmente (12, 13) miteinander verbindbar sind.

3. Stanz-Prägemaschine nach Anspruch 2, **dadurch gekennzeichnet, dass** die Aufnahmeeinheit (2) und/oder die Bohrstation (8b) und/oder die Schweißstation (8a) auf dem Bauteilaufnahmesegment (13) schwimmend gelagert sind.

4. Stanz-Prägemaschine nach Anspruch 2 oder 3, **dadurch gekennzeichnet, dass** das Robotersegment (12) fest auf dem Boden (14) verankert ist.

5. Stanz-Prägemaschine nach einem der Ansprüche 1 bis 4, **dadurch gekennzeichnet, dass** die am beweglichen Arm (11) der Roboteranlage (6) befestigten Stanzeinheiten/Stanz-Prägeeinheiten (10) auf einem E+C-Bügel (7) angeordnet sind, wobei der E+C-Bügel (7) aus einem C-förmigen C-Bügel (7a) und einem E-förmigen E-Bügel (7b) besteht und der C-Bügel (7a) rechtwinklig zum E-Bügel (7b) angeordnet ist und die Werkzeuge der Stanzeinheiten/Stanz-Prägeeinheiten (10) an den jeweiligen Enden des C-Bügels (7a) und des E-Bügels (7b) angeordnet sind.

6. Stanz-Prägemaschine nach Anspruch 5, **dadurch gekennzeichnet, dass** ein Arm (7c) des C-Bügels (7a) zugleich ein Arm (7c) des E-Bügels (7b) ist.

7. Stanz-Prägemaschine nach Anspruch 5 oder 6, **dadurch gekennzeichnet, dass** am C-Bügel (7a) das Stanz-Prägewerkzeug (15) und an den zwei Enden des E-Bügels (7b) Werkzeuge (16) für die Einbringung der Stanzungen angeordnet sind.

8. Stanz-Prägemaschine nach einem der Ansprüche 5 bis 7, **dadurch gekennzeichnet, dass** der E+C-Bügel (7) am Arm (11) der Roboteranlage (6) durch ein Schnellwechselsystem austauschbar befestigt ist.

9. Stanz-Prägemaschine nach einem der Ansprüche 5 bis 8, **dadurch gekennzeichnet, dass** der E+C-Bügel (7) auf seinem C-Bügel (7a) einen ersten Prägestempel zum Prägen eines Radius (17) mit einem auf seiner Längsachse in Richtung zum Kunststoffteil (5) hervorstehenden Vorlocher zum Einbringen einer Zentrierbohrung aufweist und bevor der erste Prägestempel in das Kunststoffteil (5) eingreift, der Vorlocher auf der zum Kunststoffteil (5) gegenüberliegenden Seite in eine Lochführung einfährt und **dadurch** der erste Prägestempel beim Prägen zentriert ist und der erste Prägestempel und damit der Vorlocher in seiner Endprägestellung für den Rest des Stanzprägens verankert bleibt und der C-Bügel (7a) auf der Innenfläche des Kunststoffteils (5) einen zweiten Prägestempel zum Prägen eines Konus (9) aufweist, wobei der zweite Prägestempel mit seiner Führungsbohrung auf den Vorlocher auffährt und danach erst prägend das Kunststoffteil (5) formt.

10. Verfahren zur Bearbeitung eines Kunststoffteils (5) auf einer Stanz-Prägemaschine nach einem der Ansprüche 1 bis 8, **gekennzeichnet durch** folgende Verfahrensschritte:
a) Einlegen des Kunststoffteils (5) auf die Aufnahmeeinheit (2) und Spannen mittels Niederhaltern
b) Verfahren der Aufnahmeeinheit (2) in die Bohrstation hinein
c) Heranfahren und Positionieren des E+C-Bügels (7), von der Roboteranlage (6) gesteuert, und Stanzung der Durchbrüche (4)
d) Verfahren des E+C-Bügels (7) in seine Ausgangsposition
e) Verfahren der Aufnahmeeinheit (2) in die Bohrstation und Bohren oder Fräsen des Konus (18) an den gestanzten Durchbrüchen (4) und Einbringung des Radius (17)
f) Verfahren der Aufnahmeeinheit (2) in die Schweißstation (8a), wo Zusatzteile (9) an dem Durchbruch (4) befestigt werden
g) Verfahren der Aufnahmeeinheit (2) in die Ausgangsposition, öffnen der Niederhalter und Entnahme des Kunststoffteils (5).

11. Verwendung einer Stanz-Prägemaschine nach einem der Ansprüche 1 bis 9 und eines Verfahrens nach Anspruche 10 zur Bearbeitung von Stoßfängern an Kraftfahrzeugen und zum Befestigen von insbesondere Park-Distance-Control-Haltern auch PDC-Halter genannt an den Stoßfängern.

## Claims

1. A stamping-embossing machine for introducing stamped and embossed break-throughs (4) into plastics portions (5) as outer automobile attachment portions and for securing additional portions (9) at these break-throughs (4), having a machine frame (1) in which a receiving unit (2) for receiving the plastics portions (5) that are to be worked, stamping units/ stamping-embossing units (10) for stamping and embossing the break-throughs (4) and a welding station (8a) for securing the additional portions at the break-through (4) are arranged, **characterised in that** the stamping units/stamping-embossing units (10) are secured in a rotatable manner on an arm (11) that can be moved in three dimensions and pertains to a robot installation (6), and the receiving unit (2) is a cassette system with exchangeable movable receiving tables for receiving and positioning the plastics portion (5) and comprises at least one boring station (8b), for the introduction of radii at the break-throughs (4) that are produced, and at least one welding station (8a) for welding on the additional portions (9) at the break-through (4).

2. A stamping-embossing machine according to claim 1, **characterised in that** the machine frame (1) consists of an independent separate robot segment (12) with the robot installation (6) and of an independent separate component-receiving segment (13) with the receiving unit (2), the boring station (8b) and the welding station (8a), wherein both segments (12, 13) can be connected together.

3. A stamping-embossing machine according to claim 2, **characterised in that** the receiving unit (2) and/or the boring station (8b) and/or the welding station (8a) are mounted in a floating manner on the component-receiving segment (13).

4. A stamping-embossing machine according to claim 2 or 3, **characterised in that** the robot segment (2) is fixedly anchored on the base (14).

5. A stamping-embossing machine according to one of claims 1 to 4, **characterised in that** the stamping units/stamping-embossing units (10) that are secured on the movable arm (11) of the robot installation (6) are arranged on an E+C clip (7), wherein the E+C clip (7) consists of a C-shaped C-clip (7a) and an E-shaped E-clip (7b), and the C-clip (7a) is arranged at right angles to the E-clip (7b), and the tools of the stamping units/stamping-embossing units (10) are arranged at the respective ends of the C-clip (7a) and of the E-clip (7b).

6. A stamping-embossing machine according to claim 5, **characterised in that** an arm (7c) of the C-clip (7a) is at the same time an arm (7c) of the E-clip (7b).

7. A stamping-embossing machine according to claim 5 or 6, **characterised in that** tools (16) for introducing the stampings are arranged on the C-clip (7a) of the stamping-embossing tool (15) and at the two ends of the E-clip (7b).

8. A stamping-embossing machine according to one of claims 5 to 7, **characterised in that** the E+C clip (7) is secured in a replaceable manner on the arm (11) of the robot installation (6) by means of a quick-change system.

9. A stamping-embossing machine according to one of claims 5 to 8, **characterised in that** the E+C clip (7) has on its C-clip (7a) a first embossing stamp for embossing a radius (17) with a pre-punch protruding on its longitudinal axis in the direction of the plastics portion (5) for introducing a centring bore, and before the first embossing stamp engages into the plastics portion (5) the pre-punch travels into a hole guide on the side lying opposite the plastics portion (5) and as a result the first embossing stamp is centred during embossing, and the first embossing stamp, and thus the pre-punch, remains anchored in its end embossing position for the rest of the stamping-embossing, and on the inner face of the plastics portion (5) the C-clip (7a) has a second embossing stamp for embossing a cone (9), wherein the second embossing stamp travels onto the pre-punch with its guide bore and only subsequently shapes the plastics portion (5) in an embossing manner.

10. A method for working a plastics portion (5) on a stamping-embossing machine according to one of claims 1 to 8, **characterised by** the following method steps:
a) laying the plastics portion (5) onto the receiving unit (2) and clamping by means of holding-down devices;
b) moving the receiving unit (2) into the boring station;
c) advancing and positioning the E+C clip (7), in a manner controlled by the robot installation (6), and stamping of the break-throughs (4);
d) moving the E+C clip (7) into its starting position;
e) moving the receiving unit (2) into the boring station and boring or milling the cone (18) at the stamped break-throughs (4) and introducing the radius (17) ;
f) moving the receiving unit (2) into the welding station (8a), where additional portions (9) are secured at the break-through (4);
g) moving the receiving unit (2) into the starting position, opening the holding-down devices and removing the plastics portion (5).

11. Use of a stamping-embossing machine according to one of claims 1 to 9 and a method according to claim 10 for working bumpers on motor vehicles and for securing in particular park-distance-control holders, also called PDC-holders, on the bumpers.

## Revendications

1. Machine à découper-estamper pour réaliser des perçages (4) découpés et estampés dans des éléments en matière plastique (5), en tant qu'éléments de montage extérieurs, et pour fixer des éléments additionnels (9) à ces perçages (4), comprenant un bâti de machine (1) dans lequel sont disposés une unité de réception (2), destinée à recevoir les éléments en matière plastique (5) à usiner, des unités de découpage/unités de découpage-estampage (10), destinées à découper et estamper les perçages (4), et un poste de soudage (8a) destiné à fixer les éléments additionnels au perçage (4); **caractérisée par le fait que** les unités de découpage/unités de découpage-estampage (10) sont fixées avec possibilité de rotation à un bras (11) à mobilité tridimensionnelle d'une installation robotisée (6), et l'unité de réception (2) est un système à cassettes avec des tables de réception mobiles interchangeables, destinées à recevoir et positionner l'élément en matière plastique (5), et comprend au moins un poste de perçage (8b), destiné à réaliser des rayons sur les perçages (4) produits, et au moins un poste de soudage (8a) pour souder les éléments additionnels (9) au perçage (4).

2. Machine à découper-estamper selon la revendication 1, **caractérisée par le fait que** le bâti de machine (1) est constitué d'un segment de robot (12) séparé indépendant, comprenant l'installation robotisée (6), et d'un segment de réception d'élément de construction (13) séparé indépendant, comprenant l'unité de réception (2), le poste de perçage (8b) et le poste de soudage (8a), les deux segments (12, 13) pouvant être reliés l'un à l'autre.

3. Machine à découper-estamper selon la revendication 2, **caractérisée par le fait que** l'unité de réception (2) et/ou le poste de perçage (8b) et/ou le poste de soudage (8a) sont montés flottants sur le segment de réception d'élément de construction (13).

4. Machine à découper-estamper selon la revendication 2 ou 3, **caractérisée par le fait que** le segment de robot (12) est ancré solidement au sol (14).

5. Machine à découper-estamper selon une des revendications 1 à 4, **caractérisée par le fait que** les unités de découpage/unités de découpage-estampage (10), fixées au bras mobile (11) de l'installation robotisés (6), sont disposées sur un étrier E+C (7), ledit étrier E+C (7) étant constitué d'un étrier C (7a) en forme de C et d'un étrier E (7b) en forme de E, et l'étrier C (7a) étant placé à angle droit par rapport à l'étrier E (7b), et les outils des unités de découpage /unités de découpage/estampage (10) étant disposés sur les extrémités respectives de l'étrier C (7a) et de l'étrier E (7b).

6. Machine à découper-estamper selon la revendication 5, **caractérisée par le fait qu'**un bras (7c) de l'étrier C (7a) est en même temps un bras (7c) de l'étrier E (7b).

7. Machine à découper-estamper selon la revendication 5 ou 6, **caractérisée par le fait que** l'outil de découpage-estampage (15) est disposé sur l'étrier C (7a) et des outils (16) pour réaliser les découpages sont disposés aux deux extrémités de l'étrier E (7b).

8. Machine à découper-estamper selon une des revendications 5 à 7, **caractérisée par le fait que** l'étrier E+C (7) est fixé de manière échangeable au bras (11) de l'installation robotisée (6), à l'aide d'un système de changement rapide.

9. Machine à découper-estamper selon une des revendications 5 à 8, **caractérisée par le fait que** l'étrier E+C (7) présente, sur son étrier C (7a), un premier poinçon d'estampage pour estamper un rayon (17) avec un poinçon de prépoinçonnage avançant sur son axe longitudinal, en direction de l'élément en matière plastique (5), et destiné à réaliser un trou de centrage, et, avant que le premier poinçon d'estampage ne pénètre dans l'élément en matière plastique (5), le poinçon de prépoinçonnage s'engage dans un trou de guidage, sur le côté situé en vis-à-vis de l'élément en matière plastique (5), et le premier poinçon d'estampage est ainsi centré lors de l'estampage, et le premier poinçon d'estampage, et donc le poinçon de prépoinçonnage, est maintenu dans sa position d'estampage finale pendant le reste du découpage-estampage, et l'étrier C (7a) présente, sur la face intérieure de l'élément en matière plastique (5), un deuxième poinçon d'estampage pour estamper un cône (9), le deuxième poinçon d'estampage se rapportant avec son trou de guidage sur le prépoinçonneur et ne façonnant qu'ensuite par estampage l'élément en matière plastique (5).

10. Procédé d'usinage d'un élément en matière plastique (5) sur une machine à découper-estamper selon une des revendications 1 à 8, **caractérisée par le fait qu'**il comprend les étapes suivantes :
a) mise en place de l'élément en matière plastique (5) sur l'unité de réception (2) et serrage au moyen d'éléments de retenue
b) déplacement de l'unité de réception (2) pour entrer dans le poste de perçage
c) approche et positionnement de l'étrier E+C (7), sous la commande de l'installation robotisée (6), et découpage des perçages (4)
d) déplacement de l'étrier E+C (7) dans sa position initiale
e) déplacement de l'unité de réception (2) pour entrer dans le poste de perçage, et perçage ou fraisage du cône (18) sur les perçages (4) découpés, et réalisation du rayon (17)
f) déplacement de l'unité de réception (2) pour entrer dans le poste de soudage (8a) où des éléments additionnels (9) sont fixés au perçage (4)
g) déplacement de l'unité de réception (2) dans la position initiale, ouverture des moyens de retenue et retrait de l'élément en matière plastique (5).

11. Utilisation d'une machine à découper-estamper selon une des revendications 1 à 9 et d'un procédé selon la revendication 10 pour l'usinage de pare-chocs sur des véhicules automobiles et pour la fixation notamment de capteurs de stationnement, ou capteurs PDC, sur des pare-chocs.
